# EUROPÄISCHE PATENTSCHRIFT

(11) **EP 1 406 554 B1**
(45) Veröffentlichungstag und Bekanntmachung des Hinweises auf die Patenterteilung: **19.09.2012**
(21) Anmeldenummer: 02754811.4
(22) Anmeldetag: 02.07.2002
(51) Int. Cl.: A61C 13/00

(54) **HERSTELLUNG VON ZAHNERSATZ AUS EINEM DREIDIMENSIONAL VERMESSENEN UND DIGITALISIERTEN POSITIVMODELL**
PRODUCTION OF REPLACEMENT TEETH FROM A THREE-DIMENSIONALLY DETERMINED AND DIGITISED POSITIVE MODEL
FABRIQUER UNE PROTHESE DENTAIRE A PARTIR D'UN MODELE POSITIF MESURE ET NUMERISE EN TROIS DIMENSIONS

(30) Priorität: 13.07.2001 DE 10133569; 13.09.2001 DE 10145104; 02.11.2001 DE 10153649
(43) Veröffentlichungstag der Anmeldung: 14.04.2004
(73) Patentinhaber: DeguDent GmbH, 63457 Hanau-Wolfgang (DE)
(72) Erfinder: WOLF, Dietrich, 69123 Heidelberg (DE); FECHER, Stefan, 63867 Johannesberg (DE); PEST, Andrea, 63814 Mainaschaff (DE); VÖLKL, Lothar, 63773 Goldbach (DE)
(74) Vertreter: Stoffregen, Hans-Herbert
(86) Internationale Anmeldenummer: PCT/EP2002/007282
(87) Internationale Veröffentlichungsnummer: WO 2003/007834

(56) Entgegenhaltungen:
- WO-A-99/47065

## Beschreibung

Die Erfindung betrifft ein Verfahren zur Herstellung von auf einem Zahnstumpf zu befestigenden Zahnersatz aus einem dreidimensional vermessenen und digitalisierten Positivmodell, welches ein Modell eines herzustellenden Gerüsts für den Zahnersatz ist, das folgende Schritte umfasst:
- Einlesen der Daten des digitalisierten Positivmodells;
- Beaufschlagen der Innenfläche des Positivmodells mit einem vorgegebenen Offsetwert zur Bildung eines Spaltes zwischen Kavität des herzustellenden Zahnersatzes und Zahnstumpf und
- Berechnung eines Programms für eine Bearbeitung eines Rohlings durch eine Werkzeugmaschine zur Herstellung des Zahnersatzes.

Die Erfindung bezieht sich insbesondere auf das Gebiet der Herstellung von Grundgerüsten für Zahnersatz, insbesondere für Zahnkronen und/oder Zahnbrücken zur Befestigung auf vorbereiteten natürlichen und/oder künstlichen Zahnstümpfen oder dergleichen.

Es sind eine Anzahl von Vorrichtungen und Verfahren zur Herstellung von künstlichen Zahnbrücken und Zahnkronen bekannt. Im Allgemeinen wird nach der zahnärztlichen Präparation, bei der die zur Verankerung dienenden Zähne zur Aufnahme einer Zahnkrone oder Zahnbrücke durch Beschleifen vorbereitet oder z. B. ein Stift implantiert wird, ein Abdruck des Zahnstumpfes, der Zahnumgebung und des Kiefers angefertigt. Dies erfolgt üblicherweise mit Silicon-Vergussmassen, es sind aber auch andere Materialien bekannt.

Aus dem Abdruck kann über eine Gipsabformung ein sogenanntes Meistermodell hergestellt werden. Dieses Meistermodell zeigt die Situation im Mund des Patienten positiv. In diesem Meistermodell modelliert der Zahntechniker mit seinen handwerklichen Fähigkeiten ein Modell des Grundgerüstes des Zahnersatzes aus Wachs oder aus bei niedriger Temperatur schmelzendem bzw. polymerisierend aushärtendem Kunststoff (Positivmodell). Hierbei kann der Zahntechniker über das vorhandene Meistermodell auch den Gegenbiss des anderen Kiefers berücksichtigen.

Traditionell wird das von dem Zahntechniker erstellte Modell in feuerfesten Massen eingebettet und ausgeschmolzen. In der so entstandenen Gussform kann das Grundgerüst in den üblichen metallischen Dentallegierungen durch Feinguss erstellt werden.

Üblicherweise erfolgt aus kosmetischen Gründen zumindest im Frontzahnbereich noch eine Verblendung in Keramik oder Kunststoff.

Aus WO 99/47065 ist bekannt, im Anschluss an die Bildung eines Wachsmodells die äußere und innere Oberfläche des Gerüstmodells vollsländig zu digitalisieren. Ein die Situation im Patientenmund unvollständig wiedergebendes Modell wird danach bezüglich der dreidimensionalen äußeren und inneren Oberfläche rechentechnisch ergänzt. Das Ergebnis der Digitalisierung und einer rechentechnischen Ergänzung soll eine digitale Beschreibung der kompletten Oberfläche des Prothesengrundgerüstes darstellen.

Um mit den aus der Digitalisierung des Wachsmodells gewonnen Daten einen Rohling aus poröser Keramik bearbeiten zu können, wird in der WO 99/47065 ausführlich beschrieben, dass die Dimensionen des Oberflächenmodells des digitalisierten Körpers zur Kompensation der Schrumpfung des Rohlings beim Sintern in allen Raumrichtungen linear vergrößert werden. Dabei soll sich der Vergrößerungsfaktor f nach einer bestimmten Funktion nach dem Verhältnis der Raumgewichte des Rohlings und eines daraus hergestellten Brückengrundgerüstes ergeben.

Aus den Daten der vergrößerten Oberfläche sollen die Steuerbefehle für eine Bearbeitungsmaschine generiert werden, mit denen das vergrößerte Brückengrundgerüst aus dem Rohling herausgearbeitet werden soll. Gegenüber der rechnerisch vergrößerten Oberfläche des Brückengrundgerüstes wird kein Aufmaß vorgesehen, wobei die bearbeitete Fläche gegenüber dem digitalisierten Körper nach der Sinterschrumpfung exakt die gleichen Masse erreichen soll. Weiter soll auch keine Nachbearbeitung erfolgen.

In der WO 99/47065 wird zudem vorgeschlagen, für die Herstellung des Brückengrundgerüstes einen Rohling zu verwenden, bei dem auf dem Rohling selbst oder seiner Verpackung, einem Anhängeetikett oder einem Beipackzettel ein maschinell oder visuell erfassbarer Identifikationscode mit angebracht ist, der den Vergrößerungsfaktor f enthält.

Das Wachsmodell des Brückengrundgerüstes soll im Positiv auf einem Gipsabdruck der über eine Silikonmasse hergestellten Negativform der präparierten Zahnstümpfe erzeugt werden, wobei die Zahnstümpfe zuvor von Hand mit einem Distanzlack bestrichen werden sollen, um später einen Zementspalt zu bilden.

Die Digitalisierung kann mechanisch oder optisch erfolgen. Hierzu wird auf Verfahren zur Digitalisierung im Mund eines Patienten auf einem präparierten Zahnstumpf oder an einem Modell verwiesen, die beispielsweise hinsichtlich einer mechanischen Digitalisierung aus US 4,182,312 und hinsichtlich einer optischen Digitalisierung aus EP 0 054 785 A1 bekannt sind.

Der wesentliche Nachteil des aus US 4,182,312 bekannten mechanischen Digitalisierens liegt in der Fixierung des mechanischen Abtastgerätes am Patienten, da die Abtastung direkt in der Mundhöhle des Patienten erfolgen soll. Entsprechend problematisch ist die sichere Handhabung des Gerätes in der engen Mundhöhle. Mit der Abtastung von Zähnen und umliegendem Gewebe soll wie bei einer Kopierfräsmaschine direkt eine Bearbeitungsmaschine zur Herstellung von Zahnprothesen gesteuert werden.

Hierzu muss eine Sonde mit einem daran fest fixierten Ubertragungsgestänge vom Zahnarzt über die interessierenden Oberflächen im Mund des Patienten bewegt werden. Eine vollständige Erfassung der Fläche erfordert sehr viele Abtastbewegungen, was aufgrund des Zeitbedarfes für den Patienten stark belastend ist. Weiterhin müssen die Sondenspitzen je nach Form des Bearbeitungswerkzeuges gewechselt werden.

Bei dem in EP 0 054 785 A1 beschriebenen Verfahren soll ein Bildaufnahmekopf in den Mund eines Patienten eingebracht werden. Dieser Bildaufnahmekopf soll ein dreidimensionales Bild einer Zahnkavität oder dergleichen erfassen. Die Bilddaten sollen dazu auf einen Computerbildschirm ausgegeben werden, so dass ein Zahnarzt überprüfen kann, ob die Positionierung des Bildaufnahmekopfes eine hinreichend genaue Abbildung ermöglicht. Gegebenenfalls kann die günstigere Positionierung des Bildaufnahmekopfes entsprechend verändert werden.

Wenn eine als zutreffend befundene Stellung erreicht worden ist, soll - ohne nähere Erläuterung - ein dreidimensionales Abbild der Zahnkavität oder dergleichen räumlich dimensionsgetreu gebildet werden. Die entsprechenden Daten sollen dann durch Interpolation und manuelle Bearbeitung des Datensatzes nach Art einer CAD-Konstruktion ergänzt werden, bis ein entsprechender Zahnersatzkörper fertig modelliert ist. Die entsprechenden Daten sollen dann direkt zur Bearbeitung eines geeigneten Rohlings verwendet werden, um unter Umgehung der eingangs beschriebenen handwerklichen Fertigungsschritte direkt aus der Bilddarstellung eine passende Zahnprothese herzustellen.

In der Praxis als nachteilig hat sich auch bei diesem Verfahren das umständliche Hantieren im Mund des Patienten mit der Kamera herausgestellt, insbesondere erfordert dies große Disziplin beim Patienten.

Weiterhin ist es, wie in der genannten Schrift beschrieben, erforderlich, den Zahn, der vermessen werden soll, mit einem Pulver zu beschichten, um definierte Reflektionsverhältnisse zu erhalten, da das natürliche Zahnmaterial transluzente Eigenschaften besitzt. Aufgrund der transluzenten Eigenschaften kann sonst Licht teilweise unkontrolliert in den zu vermessenden Zahnstumpf eindringen und unter Umständen in tieferen Schichten reflektiert werden, was zu einem fehlerhaften Ergebnis führen würde. Die Beschichtung mit einem Reflektionspulver erhöht aber gleichzeitig die Ungenauigkeit durch das Auftragen des Pulvers, das naturgemäß und aufgrund der beengten Verhältnisse im Patientenmund in der Praxis stets ungleichmäßig sein wird. Weiterhin nachteilig sind das begrenzte Auflösungsvermögen der Bildaufnehmer und die schwierigen Beleuchtungsverhältnisse in dem zu vermessenden Mund.

Aus der DE 196 42 247 C1 ist ein Verfahren zur Herstellung eines Zahnersatzteils bekannt, nach dem ein präparierter Zahn digitalisiert wird, um sodann unter Berücksichtigung von digitalisierten Modellzähnen einen Zahnersatz herzustellen. Um einen Zahnersatz herzustellen, erfolgt nach der WO 94/27523 das Ausmessen eines Zahnes, eines präparierten Teils eines Zahnes, eines Zahnabdruckes oder einer Kopie des Zahnes. Zum Ausmessen gelangt das Triangulationsverfahren zur Anwendung.

Ein pulvermetallurgisches Herstellungsverfahren für formgenauen Zahnersatz ist aus der EP 0 774 933 B1 bekannt. Dabei erfolgt ein dreidimensionales optisches oder mechanisches Lesen des präparierten Zahnes direkt im Mund oder an einem Gipsmodell. Bei der Herstellung des Zahnersatzes wird die Zementschicht mit berücksichtigt, über die der Zahnersatz mit dem präparierten Zahn verbunden wird.

Unabhängig von der Art der Herstellung des Zahnersatzes wird aus ästhetischen Gründen darauf geachtet, dass dieser so grazil wie möglich gestaltet wird. Auch wird erfahrungsgemäß die Gestaltung des zahntechnischen Modells in erster Linie nach ästhetischen Gesichtspunkten erfolgen, um genügend Platz für die spätere Verblendung zu haben. Dadurch wird die Notwendigkeit einer ausreichenden mechanischen Konstruktion vernachlässigt und damit die Lebensdauer des danach hergestellten Zahnersatzes nachteilig beeinflusst.

Der vorliegenden Erfindung liegt das Problem zugrunde, ein Verfahren zur Herstellung von Zahnersatz der eingangs genannten Art derart weiterzubilden, dass ein solcher Zahnersatz eine hinreichende Festigkeit zur Erzielung einer hohen Lebensdauer aufweist, wobei gleichzeitig sichergestellt werden soll, dass der Zahnersatz hinreichend ästhetisch wirkt und dem Aussehen eines natürlichen Zahnes entspricht. Auch soll hinsichtlich der Handhabung, der Wirtschaftlichkeit und der Qualität des damit erstellten Zahnersatzes ein verbessertes Verfahren bereitgestellt werden.

Erfindungsgemäß wird das Problem im Wesentlichen dadurch gelöst, dass als Material für den Zahnersatz ein solches verwendet wird, bei welchem die bei üblicher Benutzung des Zahnersatzes maximal auftretende Zugspannung in etwa dem 0,1 - 0,7-fachen der Zugfestigkeit des verwendeten Materials entspricht, wobei bei Al₂O₃ als das Zahnersatzmaterial eine maximale Zugspannung zwischen 35 N/mm² und 245 N/mm² und bei Zahnersatzes maximal auftretende Zugspannung in etwa 0,1 - 0,7-faches der Zugfestigkeit des verwendeten Materials entspricht.

Insbesondere sollte die maximal auftretende Zugspannung in dem Zahnersatz ≤ 0,5-faches, insbesondere 0,2 - 0,5-faches der Zugfestigkeit des verwendeten Materials entsprechen.

Durch die erfindungsgemäße Lehre erfolgt eine Auslegung des Zahnersatzes in seiner Dimensionierung hinsichtlich der Belastung durch Zugspannungen, sei es zum Beispiel in der Wandstärke, sei es zum Beispiel im Materialquerschnitt oder den Verbindungsradien bei Brückengliedern im Bereich zwischen durch Zahnstümpfe gebildeten Pfeilern. Hierdurch ist sichergestellt, dass der Zahnersatz die erforderliche Festigkeit aufweist, ohne Einbußen in seiner Ästhetik hinnehmen zu müssen. Mit anderen Worten kann weiterhin ein graziles Äußeres gegeben sein, ohne dass die Gefahr eines Zerstörens bei üblicher Belastung des Zahnersatzes erfolgt. Dabei wird der Zahnersatz in Bezug auf die besonders stark belasteten Bereiche in seiner Dimensionierung auf die Zugfestigkeit des verwendeten Materials angelegt. Wird zum Beispiel Al₂O₃ als Keramikmaterial für Zahnersatz benutzt, so beträgt die Zugfestigkeit des Materials 350 N/mm², so dass im am stärksten belasteten Bereich eine maximale Zugspannung zwischen 35 und 245 N/mm², insbesondere in etwa 175 N/mm² auftreten darf. Bei Brücken tritt diese maximale Zugspannung im Übergangsbereich zwischen den Brückengliedern und den durch Zahnstümpfe gebildeten Pfeilern auf. Wird als Keramikmaterial Y₂O₃-stabilisiertes ZrO₂ verwendet, das eine Zugfestigkeit von 650 N/mm² aufweist, so müssten dementsprechend die Dimensionierungen des Zahnersatzes derart ausgelegt werden, dass in dem am stärksten belasteten Bereich eine maximale Zugspannung zwischen 65 und 455 N/mm², insbesondere ≤ 325 N/mm² auftritt.

Ferner sollte der Offsetwert achsenabhängig vorgegeben werden.

Durch die erfindungsgemäße Lehre kann des Weiteren ein zuverlässiger und präziser Spalt zur Aufnahme von Zement oder anderen Bindemitteln für die Befestigung des Zahnersatzes auf dem präparierten Zahnstumpf mit gewünschtem Verlauf der Spaltweiten erhalten werden. Damit kann das Risiko bekannter Verfahren ausgeschlossen werden, das in der Handauftragung von Distanzlack hinsichtlich Einhaltung der optimalen Dicke, Gleichmäßigkeit und Reproduzierbarkeit des Auftrags entsteht. Insbesondere ist aufgrund der achsenabhängigen Ausbildung des Spaltes sichergestellt, dass eine optimale Passung des Zahnersatzes auf den Zahnstumpf und deren Verbindung untereinander ermöglicht wird.

Für alle gängigen Befestigungstechniken einer Krone oder einer Brücke auf einem Zahnstumpf ist es vorteilhaft, wenn der Offsetwert bis zu 150 µm beträgt.

Geringste Spaltmaße im Bereich der Grenzfläche von Zahnersatz und Zahnstumpf und damit eine besonders gute Resistenz gegen späteren Kariesbefall lässt sich erhalten, wenn der Spalt von einem kleinen Wert am Rand der durch die Innenfläche des Positivmodells definierten Kavität zu einem größeren Wert in der Spitze der Kavität unterschiedlich ist, insbesondere, wenn der Spalt am Rand der Kavität kleiner als 5 µm, vorzugsweise kleiner als 2,8 µm ist, besonders vorzugsweise nicht mehr als 1,5 µm beträgt.

Auch ohne Bedienereingriff ist das erfindungsgemäße Verfahren besonders sicher, wenn es ferner gekennzeichnet ist durch folgenden Schritt: Durchführen einer Plausibilitätsprüfung der Daten anhand der Daten benachbarter Bereiche des Positivmodells und gegebenenfalls Ausgabe einer Warnung.

In einer weiteren vorteilhaften Ausgestaltung ist das Verfahren ferner gekennzeichnet durch folgenden Schritt: Ersatz, vorzugsweise einzelner, fehlender Datenpunkte oder von nicht plausiblen Datenpunkten durch interpolierte Werte anhand der Daten benachbarter Bereiche des Positivmodells und Glätten der äußeren und/oder inneren Oberfläche der Daten des Positivmodells mittels einer Glättungsfunktion.

Um eine Bildung von Hohlräumen zwischen Zahnersatz und Zahnstumpf zu vermeiden, von dem aus in der Regel ein weiterer Kariesbefall des Zahnstumpfes und damit in der Regel eine Zerstörung des Pfeilerzahnes einer Brücke zu erwarten ist, ist das Verfahren vorteilhaft ferner gekennzeichnet durch folgenden Schritt: Durchführen einer Prüfung der Daten der Innenfläche des Positivmodells auf Hinterschnitte anhand der Daten benachbarter Bereiche des Positivmodells und gegebenenfalls Ausgabe einer Warnung.

Für eine besonders hohe Sicherheit gegen Bruch des Zahnersatzes bei späterer Benutzung durch den Patienten ist das Verfahren ferner gekennzeichnet durch folgenden Schritt: Berechnen der Wandstärke des Positivmodells durch Vergleichen der Daten der Innenfläche des Positivmodells mit den Daten der Außenfläche des Positivmodells und Vergleichen des Wertes der Wandstärke mit einem Wandstärkenmindestwert, Korrektur der Daten der Außenseite des Positivmodells so, dass zumindest der Wandstärkenmindestwert erhalten wird und/oder Ausgabe einer Warnung, insbesondere, wenn der Wandstärkenmindestwert zumindest etwa 0,5 mm, vorzugsweise etwa 0,1 mm, insbesondere zumindest etwa 0,3 mm beträgt.

Zur Sicherstellung einer günstigen Ausgestaltung des Zahnersatzes ist es auch vorteilhaft, wenn durch Vergleichen der Radien der Außen- und/oder Innenflächen des Positivmodells mit einem Mindestradius von zumindest etwa 0,1 mm, vorzugsweise etwa 0,2 mm, insbesondere 0,3 mm und Korrektur der Daten der Außen- und/oder Innenfläche des Positivmodells sichergestellt wird, dass zumindest der Mindestradius erhalten wird und/oder die Ausgabe einer Warnung erfolgt.

Für die Erstellung besonders stabiler und dauerhafter Brücken ist das Verfahren ferner gekennzeichnet durch folgenden Schritt: Berechnen des Materialquerschnittes bei Brückengliedern im Bereich zwischen zwei durch Zahnstümpfe gebildeten Pfeilern, Vergleichen des Querschnittes mit einem Mindestwert, Korrektur der Daten der Außenseite des Positivmodells so, dass zumindest der Mindestwert erhalten wird und/oder Ausgabe einer Warnung, insbesondere, wenn der Mindestwert zumindest etwa 2 mm², vorzugsweise etwa 5 mm², insbesondere zumindest etwa 7 mm² beträgt.

Zur Vermeidung einer zu engen Kavität des Zahnersatzes bei Spitzpräparation des Zahnstumpfes, die keine für übliche Fräser ausreichende Verrundung aufweist, ist das Verfahren ferner gekennzeichnet durch folgenden Schritt: Berechnen der Radien der Innenfläche des Positivmodells Vergleichen der Werte der Radien mit einem Mindestradius, Korrektur der Daten der Innenfläche des Positivmodells so, dass die Kavität so weit vergrößert ist, dass zumindest der Mindestradius erhalten wird und/oder Ausgabe einer Warnung.

Je nach Ansteuerung der zu verwendenden Werkzeugmaschine kann es zweckmäßig sein, dass das Verfahren, ferner gekennzeichnet ist durch folgenden Schritt: Beaufschlagen des Positivmodells mit einem vorgegebenen Offsetwert zur Anpassung an die Werkzeugkontur bei der nachfolgenden Bearbeitung.

Für die Herstellung von Zahnersatz aus Rohlingen, die nach der maschinellen Bearbeitung bei der Fertigstellung einer Dimensionsänderung unterliegen, z.B. nicht oder vorgesinterte Keramikrohlinge, die nach der formgebenden Bearbeitung noch fertiggesintert werden müssen und dabei schrumpfen, ist das erfindungsgemäße Verfahren besonders vorteilhaft ferner gekennzeichnet durch folgenden Schritt: Beaufschlagen der Daten des Positivmodells mit einem Vergrößerungsfaktor zur Kompensation von Schrumpfung oder Quellung des Materials für einen Zahnersatz bei der Fertigung, insbesondere für eine gute Passform, wenn der Vergrößerungsfaktor nichtlinear und/oder anisotrop ist.

Besonders genau passender Zahnersatz kann dabei insbesondere bei real anisotropen oder inhomogenen Rohlingen erhalten werden, wenn der Vergrößerungsfaktor durch eine dreidimensionale Transferfunktion f (x,y,z) bestimmt ist, wobei die dreidimensionale Transferfunktion f(x,y,z) zweckmäßig bestimmt wird durch die dreidimensionale Dichteverteilung F(x,y,z) des Keramikrohlings.

Für die weitgehend automatisierte Erstellung ist das Verfahren dabei weiter vorteilhaft gekennzeichnet durch Einlesen der einem zu bearbeitenden Rohling zugeordneten Transferfunktion f(x,y,z) oder Dichteverteilung F(x,y,z) von einem Datenträger, insbesondere, wenn der Datenträger ein Barcodeetikett, ein über ein Lesegerät auslesbares Transponderetikett oder eine Datenbank ist, auf die über ein an oder bei dem Rohling angebrachten Identifikationsmittel zugegriffen werden kann.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden Ausführungsbeispielen.

Es zeigt:

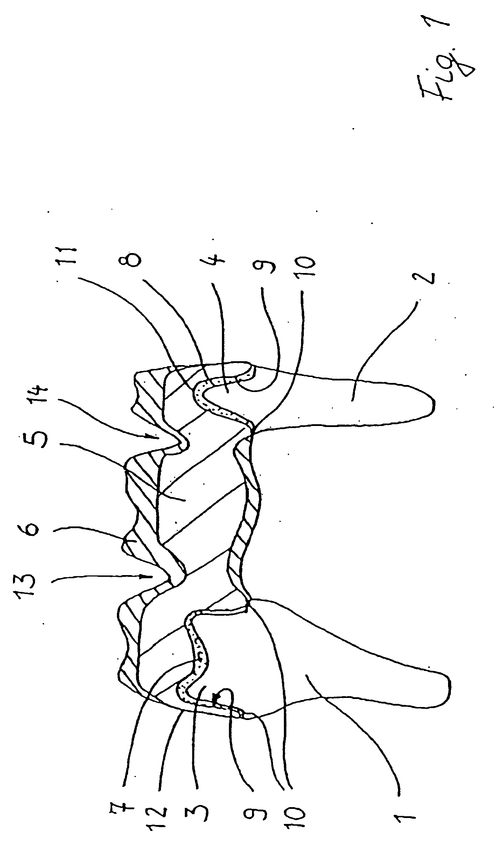

- Fig. 1: einen schematischen Querschnitt durch zwei Zahnstümpfe mit Zahnersatz in Form einer Brücke.

Die Figur 1 zeigt zwei präparierte Zahnstümpfe 1 und 2, die in ihren oberen Bereichen 3 und 4 zur Aufnahme eines Zahnersatzes beschliffen sind. Der Zahnersatz umfasst hier ein Brückengrundgerüst 5, das zusätzlich in herkömmlicher Weise zur Herstellung der Sicht- und Kauflächen mit einer Verblendung 6 versehen ist. Das Brückengrundgerüst 5 ist auf den Zahnstümpfen 1, 2 jeweils mittels einer Schicht eines Dentalzementes in den Zementspallen 7 und 8 befestigt.

Insbesondere die Spalte 7, 8 wie Zementspalte sind aus Gründen der Übersichtlichkeit völlig unmaßstäblich dargestellt.

Um den Zahnersatz, d.h. im Ausführungsbeispiel das Brückengrundgerüst 5 mit der Verblendung 6 mit den gewünschten Spalten 7, 8 herzustellen, wird erfindungsgemäß zunächst ein Meistermodell des Kiefers angefertigt, in dem der Zahnersatz eingesetzt werden soll. Das Meistermodell zeigt die Situation des Patienten im Mund, also positiv, das aus einem der Negativform entsprechenden Abdruck gewonnen wird. Auf dem Meistermodell modelliert der Zahntechniker mit seinen handwerklichen Fähigkeiten ein Modell des herzustellenden Grundgerüstes des Zahnersatzes in Wachs sowie bei niedriger Temperatur schmelzenden und polymerisierend aushärtendem Kunststoff, um ein Positivmodell zu gewinnen. Dieses Positivmodell wird digitalisiert, wobei bekannte optische oder mechanische Verfahren zur Anwendung gelangen können. Gleichzeitig wird durch Eingeben von Offsetwerten ein Spalt zwischen späterem Zahnersatz und Zahnstumpf generiert, um die gewünschte Passgenauigkeit zu erzielen. Dabei ist die Spaltbreite achsenabhängig, d.h. insbesondere in Z-Richtung erfolgt eine Verzerrung, wohingegen im unteren Randbereich ein geringes Spaltmaß, das bis 0 gehen kann, gewählt wird.

Unabhängig hiervon wird die Dimensionierung des herzustellenden Grundgerustes bzw. Zahnersatzes derart ausgelegt, dass bei üblicher Belastung maximal auftretende Zugspannung in etwa 0,1 - 0.7-faches der Zugfestigkeit des verwendeten Materials entspricht. Als Materialien kommen zum Beispiel Al₂O₃, Zirkonoxid-Mischkristalle (ZrO₂/Y-TZP), MgO, Y₂O₃ oder TiO₂ in Frage, um nur beispielhaft einige Keramiken zu nennen.

Bei der Verwendung von zum Beispiel Al₂O₃ ist darauf zu achten, dass die maximale Zugspannung nicht 245 N/mm² übersteigt. Üblicherweise reicht jedoch eine Materialauslegung auf eine maximale Zugspannung von 175 N/mm² aus.

Bei der Herstellung des Zahnersatzes 5 mit Hilfe des erfindungsgemäßen Verfahrens kann der Offsetwert, mit dem die Innenfläche 9 des Obernächenmodells zur Bildung Zementspaltes 7, 8 zwischen späterem Zahnersatz 5 und Zahnstumpf 1, 2 beaufschlagt wird, entweder vom Bediener interaktiv eingestellt oder durch die Programmierung fest vorgegeben sein.

Geringste Spaltmaße im Bereich der Grenzfläche von Zahnersatz 5 und Zahnstumpf 1, 2 und damit eine besonders gute Resistenz gegen späteren Kariesbefall lässt sich erhalten, wenn der Spalt von einem kleinen Wert am Rand 10 der durch die Innenfläche 9 des Positivmodells definierten Kavität zu einem größeren Wert in der Spitze 11 der Kavität unterschiedlich ist, insbesondere, wenn der Spalt am Rand 10 der Kavität kleiner als 5 µm, vorzugsweise kleiner als 2,8 µm ist, besonders vorzugsweise nicht mehr als 1,5 µm beträgt.

Um eine Bildung von Hohlräumen zwischen Zahnersatz 5 und Zahnstumpf 1,2 zu vermeiden, von dem aus in der Regel ein weiterer Kariesbefall des Zahnstumpfes 1, 2 und damit in der Regel eine Zerstörung des Pfeilerzahnes einer Brücke 5 zu erwarten ist, ist es vorteilhaft, ferner eine Prüfung der Daten der Innenfläche 9 des Positivmodells auf Hinterschnitte anhand der Daten benachbarter Bereiche des Positivmodells durchzuführen, da Hinterschnitte entweder dazu führen, dass der Zahnersatz nicht auf den Stumpf 1, 2 gesteckt werden kann, oder sich ein Hohlraum bildet.

Für eine besonders hohe Sicherheit gegen Bruch des Zahnersatzes 5 bei späterer Benutzung durch den Patienten erfolgt ferner ein Berechnen der Wandstärke des Datenmodells durch Vergleichen der Daten der Innenfläche 9 des Positivmodells mit den Daten der Außenfläche 12 2 des Positivmodells und Vergleichen des Wertes der Wandstärke mit einem Wandstärkenmindestwert, der entweder durch eine Eingabe des Zahnarztes oder Zahntechnikers bestimmt oder durch die Programmierung fest voreingestellt sein kann. Bei Verwendung von Zirkonoxidkeramik ist es zweckmäßig, wenn der Wandstärkenmindestwert vorzugsweise etwa 0,1 mm bis 0,3 mm beträgt.

Für die Erstellung besonders stabiler und dauerhafter Brücken 5 erfolgt vorzugsweise ein Berechnen des Materialquerschnittes bei Brückengliedern im Bereich 13, 14 zwischen zwei durch Zahnstümpfe 1, 2 gebildeten Pfeilern und Vergleichen des Querschnittes mit einem Mindestwert, der entweder vom Bediener interaktiv eingestellt oder durch die Programmierung fest vorgegeben sein kann, und Korrektur der Daten der Außenseite 12 des Positivmodells so, dass zumindest der Mindestwert erhalten wird, der vorzugsweise bei yttriumoxidverstärkter Zirkonoxidkeramik etwa 2 mm² bis 7 mm² beträgt.

## Patentansprüche

1. Verfahren zur Herstellung von auf einem Zahnstumpf (1; 2) zu befestigendem Zahnersatz (5) aus einem dreidimensional vermessenen und digitalisierten Positivmodell, welches ein Modell eines herzustellenden Grund-gerüsts für den Zahnersatz ist, das folgende Schritte umfasst:
- Einlesen der Daten des digitalisierten Positivmodells;
- Beaufschlagen der Innenfläche (9) des Positivmodells mit einem vorgegebenen Offsetwert zur Bildung eines Spaltes (7, 8) zwischen Kavität des herzustellenden Zahnersatzes (5) und Zahnstumpf (1, 2) und
- Berechnung eines Programms für eine Bearbeitung eines Rohlings durch eine Werkzeugmaschine zur Herstellung des Zahnersatzes,
**dadurch gekennzeichnet,**
**dass** als Material für den Zahnersatz (5) ein solches verwendet wird, bei welchem die bei üblicher Benutzung des Zahnersatzes maximal auftretende Zugspannung in etwa dem 0,1 - 0,7-fachen der Zugfestigkeit des verwendeten Materials entspricht, wobei das Material Al₂O₃ oder Y₂O₃-Stabilisiertes ZrO₂ ist, wobei bei Al₂O₃ mit einer Zugfestigkeit von 350 N/mm² als das Zahnersatzmaterial eine maximale Zugspannung zwischen 35 N/mm² und 245 N/mm² und bei Y₂O₃-stabilisiertem ZrO₂ mit einer Zugfestigkeit von 650 N/mm² als das Zahnersatzmaterial eine maximale Zugspannung zwischen 65 N/mm² und 455 N/mm² auftreten darf,
**dass** die Wandstärke des Datenmodells durch Vergleichen der Daten von Innenfläche (9) des Positivmodells mit den Daten der Außenfläche (12) des Positivmodells und Vergleichen des Wertes der Wandstärke mit einem Wandstärkenmindesiwert berechet wird, dass die Daten der Außenseite (12) des Positivmodells korrigiert werden ein Wandstärkenmindestwert von zumindest 0.05 mm erhalten wird
**dass** der Materialquerschnitt bei Brückengliedern im Bereich (13, 14) zwischen zwei durch Zahnstümpfe (1,2) gebildeten Pfeilem berechnet wird der Querschnitt mit einem Mindestwert verglichen wird, und die Daten der Außenseite (12) des Posittvmodells so korrigiert werden, dass ein Mindestwert von zumindest 7 mm² erhälten wird
und **dass** die Radien der Außen- und/oder Innenflächen des Positivmodells mit einem Mindesradius von zumindest 0,1 mm verglichen und die Daten der Außen- und/oder Innenfläche des Positivmodells auf den Mindestradius Korrigiert werden,
und **dass** der Spalt derart ausgebildet wird, dass dieser von einem kleinen wert am Rand der durch die Innenfläche des Positivmodells definierten kavität zu einem größeren wert in der Spiltze der Kavität verläuft.

2. Verfahren nach Anspruch 1,
**dadurch gekennzeichnet,**
**dass** der Wandstärkenmindestwert 0,05 mm - 1,0 mm, insbesondere 0,1 mm - 0,8 mm beträgt.

3. Verfahren nach Anspruch 1,
**dadurch gekennzeichnet,**
**dass** der Wandstärkenmindestwert zumindest 0,3 mm beträgt.

4. Verfahren nach Anspruch 1,
**dadurch gekennzeichnet,**
**dass** der Mindestwert des Ouerschnitts 2 mm² - 7 mm² beträgt.

5. Verfahren nach zumindest Anspruch 1,
**dadurch gekennzeichnet,**
**dass** der Mindeswert des Querschnitts zumindest 7 mm² beträgt.

6. Verfahren nach Anspruch 1,
**dadurch gekennzeichnet,**
**dass** der Offsetwert achsenabhängig vorgegeben wird.

7. Verfahren nach zumindest einem der vorhergehenden Ansprüche,
**dadurch gekennzeichnet,**
**dass** der Offsetwert bis zu 150 µm beträgt.

8. Verfahren nach zumindest einem der vorhergehenden Ansprüche,
**dadurch gekennzeichnet,**
**dass** der Offsetwert am Rand der Kavität ≤ 5 µm, vorzugsweise ≤ 2,8 µm ist, insbesondere ≤ 1,5 µm beträgt.

9. Verfahren nach zumindest einem der vorhergehenden Ansprüche,
ferner **gekennzeichnet durch** folgenden Schritt:
Durchführen einer Plausibilitätsprüfung der Daten anhand der Daten benachbarter Bereiche des Positivmodells und gegebenenfalls Ausgabe einer Warnung.

10. Verfahren nach zumindest einem der vorhergehenden Ansprüche,
ferner **gekennzeichnet durch** folgenden Schritt:
Ersatz, vorzugsweise einzelner, fehlender Datenpunkte oder von nicht plausiblen Datenpunkten **durch** interpolierte Werte anhand der Daten benachbarter Bereiche des Positivmodells.

11. Verfahren nach zumindest einem der vorhergehenden Ansprüche,
ferner **gekennzeichnet durch** folgenden Schritt:
Durchführen einer Prüfung der Daten der Innenfläche (9) des Positivmodells auf Hinterschnitte anhand der Daten benachbarter Bereiche und gegebenenfalls Ausgabe einer Warnung.

12. Verfahren nach zumindest einem der vorhergehenden Ansprüche,
ferner **gekennzeichnet durch** folgenden Schritt:
Glätten der äußeren und/oder inneren Oberfläche (12) des Datenmodells mittels einer Glättungsfunktion.

13. Verfahren nach zumindest einem der vorhergehenden Ansprüche,
ferner **gekennzeichnet durch** folgenden Schritt:
Beaufschlagen des Positivmodells mit einem vorgegebenen Offsetwert zur Anpassung an die Werkzeugkontur bei der nachfolgenden Bearbeitung.

14. Verfahren nach zumindest einem der vorhergehenden Ansprüche,
ferner **gekennzeichnet durch** folgenden Schritt:
Beaufschlagen der Daten des Positivmodells mit einem Vergrößerungsfaktor zur Kompensation von Schrumpfung oder Quellung des Materials für den Zahnersatz bei der Fertigung.

15. Verfahren nach Anspruch 14,
**dadurch gekennzeichnet,**
**dass** der Vergrößerungsfaktor über das Oberflächenmodell anisotrop und/oder nichtlinear ist.

16. Verfahren nach Anspruch 14 oder 15,
**dadurch gekennzeichnet,**
**dass** der Vergrößerungsfaktor über das Oberflächenmodell durch eine dreidimensionale Transferfunktion f (x, y, z) bestimmt ist.

17. Verfahren nach Anspruch 16,
**dadurch gekennzeichnet,**
**dass** die dreidimensionale Transferfunktion f (x, y, z) bestimmt wird durch die dreidimensionale Dichteverteilung F (x, y, z) eines Keramikrohlings.

18. Verfahren nach Anspruch 16 oder 17,
**gekennzeichnet durch,**
Einlesen der einem zu bearbeitenden Rohling zugeordneten Transferfunktion f (x, y, z) oder Dichteverteilung F (x, y, z) von einem Datenträger.

19. Verfahren nach Anspruch 18,
**dadurch gekennzeichnet,**
**dass** der Datenträger ein Barcodeetikett, ein Transponderetikett oder eine Datenbank ist, auf die über ein an oder bei dem Rohling angebrachten Identifikationsmittel zugegriffen werden kann.

## Claims

1. A method for the production of a dental prosthesis (5) to be fastened to a tooth stump (1; 2) and consisting of a three-dimensionally mapped and digitized positive model, which is a model of a framework to be produced for the dental prosthesis, comprising the following steps:
- inputting the data of the digitized positive model;
- acting upon the inner surface (9) of the positive model with a preset offset value to form a gap (7, 8) between cavity of the dental prosthesis to be produced and tooth stump (1, 2), and
- calculating a program for processing a blank by a machine tool for producing the dental prosthesis,
**characterized in**
**that** as material for the dental prosthesis (5) one is used which has, in normal use of the prosthesis, a maximum tensile stress occurring which corresponds to about 0.1-0.7 times the tensile strength of the material used, said material being Al₂O₃ or Y₂O₃-stabilized ZrO₂, whereby with the dental prosthesis material being said Al₂O₃ with a tensile stress of 350 N/mm² the maximum tensile stress is possible to be in the range of 35 N/mm² and 245 N/mm² and with the dental prosthesis material being said Y₂O₃-stabilized ZrO₂ with a tensile stress of 650 N/mm² the maximum tensile stress is possible to be in the range of 65 N/mm² and 455 N/mm², that the wall thickness of the data model is calculated by comparing the data of inner surface (9) of the positive model with the data of the outer surface (12) of the positive model and comparing the value of the wall thickness with a wall thickness minimum value,
**that** the data of the outer side (12) of the positive model are corrected such that a wall thickness minimum value of at least 0,05 mm the is obtained,
**that** the material cross-section in bridge elements is calculated in the area (13, 14) between two posts formed by tooth stumps (1, 2), the cross-section is compared with a minimum value, and the data of the outer side (12) of the positive model is corrected such that a minimum value of at least 2 mm² is obtained, and
**that** the radii of the outer and/or inner surfaces of the positive model are compared with a minimum radius of at least 0.1 mm and the data of the outer and/or inner surface of the positive model are corrected to the minimum radius, and
**that** the gap is designed such that it runs from a small value at the margin of the cavity defined by the inner surface of the positive model to a larger value in the point of the cavity.

2. A method according to claim 1,
**characterized in**
**that** the wall thickness minimum value is 0.05 mm-1.0 mm, in particular 0.1 mm-0.8 mm.

3. A method according to claim 1,
**characterized in**
**that** the wall thickness minimum value is at least 0.3 mm.

4. A method according to claim 1,
**characterized in**
**that** the minimum value of the cross-section is 2 mm² -7 mm².

5. A method according to at least claim 1,
**characterized in**
**that** the minimum value of the cross-section is at least 7 mm².

6. A method according to claim 1,
**characterized in**
**that** the offset value is preset dependent on the axis.

7. A method according to at least one of the preceding claims,
**characterized in**
**that** the offset value is up to 150 µm.

8. A method according to at least one of the preceding claims,
**characterized in**
**that** the offset value at the marging of the cavity is ≤ 5 µm, preferably ≤ 2.8µm, in particular ≤1.5 µm.

9. A method according to at least one of the preceding claims,
further **characterized by** the following step:
conduction of a plausibility test of the data with reference to the data of adjacent areas of the positive model and, optionally, issuance of a warning.

10. A method according to at least one of the preceding claims,
further **characterized by** the following step:
replacement of, preferably individual, missing data points or non-plausible data points by interpolated values with reference to the data of adjacent areas of the positive model.

11. A method according to at least one of the preceding claims,
further **characterized by** the following step:
conduction of a test of the data of the inner surface (9) of the positive model for undercuts with reference to the data of adjacent areas and, optionally, issuance of a warning.

12. A method according to at least one of the preceding claims,
further **characterized by** the following step:
smoothing the outer and/or inner surface (12) of the data model by means of a smoothing function.

13. A method according to at least one of the preceding claims,
further **characterized by** the following step:
acting upon the positive model with a preset offset value to adapt it to the tool contour during the subsequent processing.

14. A method according to at least one of the preceding claims,
further **characterized by** the following step:
acting upon the data of the positive model with an enlargement factor to compensate shrinkage or swelling of the material for the dental prosthesis during production.

15. A method according to claim 14,
**characterized in**
**that** the enlargement factor over the surface model is anisotropic and/or nonlinear.

16. A method according to claim 14 or 15,
**characterized in**
**that** the enlargement factor over the surface model is determined by a three-dimensional transfer function f (x, y, z).

17. A method according to claim 16,
**characterized in**
**that** the three-dimensional transfer function f (x, y, z) is determined by the three-dimensional density distribution F(x, y, z) of a ceramic blank.

18. A method according to claim 16 or 17,
**characterized by**
inputting from a data carrier the transfer function f (x, y, z) or density distribution F(x, y, z) allocated to a blank to be processed.

19. A method according to claim 18,
**characterized in**
**that** the data carrier is a bar code label, a transponder label or a database which can be accessed via identification means applied to or at the blank.

## Revendications

1. Procédé pour fabriquer une prothèse dentaire (5), destinée à être fixée sur un moignon dentaire (1 ; 2), à partir d'un modèle positif mesuré et numérisé en trois dimensions qui est un modèle d'une structure de base à fabriquer pour la prothèse dentaire, ledit procédé comprenant les étapes suivantes :
- lecture des données du modèle positif numérisé ;
- affectation à la face intérieure (9) du modèle positif d'une valeur de décalage prédéfinie afin de former un interstice (7, 8) entre la cavité de la prothèse dentaire à fabriquer (5) et le moignon dentaire (1, 2) et
- calcul d'un programme pour un façonnage d'un lingotin par une machine-outil afin de fabriquer la prothèse dentaire,
**caractérisé en ce**
**que** pour la prothèse dentaire (5) est utilisé un matériau pour lequel l'effort de traction maximal en cas d'usage habituel de la prothèse dentaire est égal à environ 0,1 à 0,7 fois la résistance à la traction du matériau utilisé, le matériau étant de l'Al₂O₃ ou de la ZrO₂ stabilisée par Y₂O₃, sachant qu'avec de l'Al₂O₃ en tant que matériau de prothèse dentaire et ayant une résistance à la traction de 350 N/mm², peut être appliqué un effort de traction maximal compris entre 35 N/mm² et 245 N/mm², et qu'avec de la ZrO₂ stabilisée par Y₂O₃ en tant que matériau de prothèse dentaire et ayant une résistance à la traction de 650 N/mm², peut être appliqué un effort de traction maximal compris entre 65 N/mm² et 455 N/mm², que l'épaisseur de paroi du modèle de données est calculée par comparaison des données de la face intérieure (9) du modèle positif avec les données de la face extérieure (12) du modèle positif et par comparaison de la valeur de l'épaisseur de paroi avec une valeur minimale d'épaisseur de paroi, que les données de la face extérieure (12) du modèle positif sont corrigées de manière telle qu'une valeur minimale d'épaisseur d'au moins 0,05 mm est obtenue, qu'est calculée la section transversale du matériau pour les éléments de bridge dans la zone (13, 14) entre deux piles formées par des moignons dentaires (1, 2), que la section transversale est comparée avec une valeur minimale, et que les données de la face extérieure (12) du modèle positif sont corrigées de manière telle qu'une valeur minimale d'au moins 2 mm² est obtenue, et que les rayons de la face extérieure et/ou de la face intérieure du modèle positif sont comparés avec un rayon minimal d'au moins 0,1 mm et les données de la face extérieure et/ou de la face intérieure du modèle positif sont corrigées en tenant compte du rayon minimal, et que l'interstice est formé de manière telle qu'il s'étend avec une petite valeur au bord de la cavité définie par la face intérieure du modèle positif pour atteindre une plus grande valeur au sommet de la cavité.

2. Procédé selon la revendication 1,
**caractérisé en ce**
**que** la valeur minimale d'épaisseur de paroi est comprise entre 0,05 mm et 1,0 mm, en particulier entre 0,1 mm et 0,8 mm.

3. Procédé selon la revendication 1,
**caractérisé en ce**
**que** la valeur minimale d'épaisseur de paroi est au moins égale à 0,3 mm.

4. Procédé selon la revendication 1,
**caractérisé en ce**
**que** la valeur minimale de section transversale est comprise entre 2 mm² et 7 mm².

5. Procédé selon la revendication 1,
**caractérisé en ce**
**que** la valeur minimale de section transversale est au moins égale à 7 mm².

6. Procédé selon la revendication 1,
**caractérisé en ce**
**que** la valeur de décalage est prédéfinie en fonction des axes.

7. Procédé selon au moins une des revendications précédentes,
**caractérisé en ce**
**que** la valeur de décalage est au maximum égale à 150 µm.

8. Procédé selon au moins une des revendications précédentes,
**caractérisé en ce**
**que** la valeur de décalage au bord de la cavité est ≤ 5 µm, de préférence ≤ 2,8 µm, en particulier ≤ 1,5 µm.

9. Procédé selon au moins une des revendications précédentes,
de plus **caractérisé par** l'étape suivante :
réalisation d'un contrôle de vraisemblance des données à l'aide des données de zones voisines du modèle positif et sortie d'un avertissement le cas échéant.

10. Procédé selon au moins une des revendications précédentes,
de plus **caractérisé par** l'étape suivante :
remplacement, de préférence de points de données manquants et isolés, ou de points de données non vraisemblables, par des valeurs interpolées à l'aide des données des zones voisines du modèle positif.

11. Procédé selon au moins une des revendications précédentes,
de plus **caractérisé par** l'étape suivante :
réalisation d'un contrôle des données de la face intérieure (9) du modèle positif quant à la présence de contre-dépouilles à l'aide des données des zones voisines et sortie d'un avertissement le cas échéant.

12. Procédé selon au moins une des revendications précédentes,
de plus **caractérisé par** l'étape suivante :
lissage de la face extérieure (12) et/ou de la face intérieure du modèle de données au moyen d'une fonction de lissage.

13. Procédé selon au moins une des revendications précédentes,
de plus **caractérisé par** l'étape suivante :
affectation au modèle positif d'une valeur de décalage prédéfinie pour adaptation au contour de l'outil lors du façonnage consécutif.

14. Procédé selon au moins une des revendications précédentes,
de plus **caractérisé par** l'étape suivante :
affectation aux données du modèle positif d'un facteur de grossissement pour compenser la rétraction ou le gonflement du matériau destiné à la prothèse dentaire lors de la fabrication.

15. Procédé selon la revendication 14,
**caractérisé en ce**
**que** le facteur de grossissement sur le modèle des faces est anisotrope et/ou non linéaire.

16. Procédé selon la revendication 14 ou 15,
**caractérisé en ce**
**que** le facteur de grossissement sur le modèle des faces est déterminé par une fonction de transfert tridimensionnelle f (x, y, z).

17. Procédé selon la revendication 16,
**caractérisé en ce**
**que** la fonction de transfert tridimensionnelle f (x, y, z) est déterminée par la répartition densitométrique tridimensionnelle F (x, y, z) d'un lingotin de céramique.

18. Procédé selon la revendication 16 ou 17,
**caractérisé par**
la lecture sur un support de données de la fonction de transfert f (x, y, z) ou de la répartition densitométrique F (x, y z) associée à un lingotin à façonner.

19. Procédé selon la revendication 18,
**caractérisé en ce**
**que** le support de données est une étiquette à code-barres, une étiquette transpondeuse ou une base de données accessible via un moyen d'identification placé sur ou à proximité du lingotin.
